# EUROPEAN PATENT APPLICATION

(11) **EP 1 867 665 A2**
(43) Date of publication of application: **19.12.2007**
(21) Application number: 07018901.4
(22) Date of filing: 09.06.2004
(51) Int. Cl.: C08F 220/12

(54) **Crosslinkable methacrylic resin composition and transparent member**

(30) Priority: 09.06.2003 JP 2003163748; 21.10.2003 JP 2003360521
(62) Divisional of application: 04745953.2
(71) Applicant: Mitsui Chemicals, Inc., Tokyo 105-7117 (JP)
(72) Inventor: Kohgo, Osamu c/o Mitsui Chemicals, Inc., Chiba 299-0265 (JP); Kawasaki, Noboru c/o Mitsui Chemicals, Inc., Chiba 299-0265 (JP); Enna, Masahiro c/o Mitsui Chemicals, Inc., Chiba 299-0265 (JP)
(74) Representative: Stuart, Ian Alexander

(57) **Abstract**

Disclosed is a methacrylic resin monomer composition consisting of the following (A) to (C) and optional minor components:
(A) a methyl methacrylate monomer and/or a syrup thereof:
(B) a compound represented by the general formula (1); 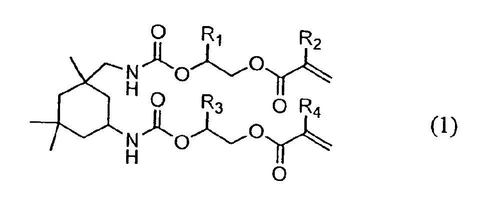 wherein, in the formula, R₁ and R₃, and R₂ and R₄ represent pairs of hydrogen atoms or of methyl groups; and
(C) a radical initiator.

A crosslinkable methacrylic resin produced from it has improved properties such as heat resistance, rigidity, low water absorption and chemical resistance, without loss of the high transparency a PMMA originally has. A transparent member and an optical member composed of such a resin are also disclosed.

## Description

### TECHNICAL FIELD

The present invention relates to a crosslinkable methacrylic resin composition which is improved in heat resistance, chemical resistance or the like, and suitable for a transparent member. More specifically, the invention relates to a resin composition comprising methyl methacrylate (MMA) and a specific compound, the resin thereof, and a transparent member comprising the aforementioned resin.

### BACKGROUND ART

A methacrylic resin represented by a methacrylic resin (hereinafter to be referred to as PMMA) which is widely used as a transparent member and also useful as a raw material of a photo-curable resin, a thermosetting resin, a paint, an adhesive, an ink and the like. Such a methacrylic resin has advantages such that the transparency and weather resistance are excellent, a balance of transparency, weather resistance and mechanical properties is good, and the processability is good. However, the demand for physical properties of a methacrylic resin or the alternative resin is diversified as grazing materials, display members (the light guiding plates, the diffusion plates for the liquid crystal display or the screen plates for the projection display or the like.), an illuminator members such as the light covers or members such as the optical lenses. For example, improvement of heat resistance, rigidity, chemical resistance and the like has been in demand.

The technology for improved heat resistance of a PMMA that has been conventionally known from the past has been disclosed, for example, in a copolymer resin (Patent Document 1) of methyl methacrylate (hereinafter to be referred to as MMA) with α-methylstyrene, a copolymer resin (Patent Document 2) of MMA with styrene or α-methylstyrene and a maleic anhydride, a copolymer resin (Patent Document 3) of MMA with α-methylstyrene and maleimide, and the like.

According to the methods as described in the above Patent Documents 1 to 3, heat resistance can be enhanced, whereas the polymerization speed is considerably slow and it takes a long time for polymerization so that coloring or the like occurs, thus deteriorating transparency.

Furthermore, when PMMA plates or molded articles are manufactured on industrial scale, there is a generally used method which employs an MMA syrup obtained by prepolymerizing MMA to a certain extent, that is, "a mixture of a methyl methacrylate polymer with a methyl methacrylate monomer" for the purpose of shortened production time and decreased shrinkage of a molded article. When the MMA syrup is copolymerized with a monomer for copolymerization such as α-methylstyrene, styrene or the like as described in Patent Documents 1 to 3, heat resistance can be improved, whereas a transparent resin cannot be obtained due to haze.

In this manner, in the prior art, heat resistance of a PMMA could be improved to some degree, whereas transparency being a big advantage was deteriorated.
Patent Document 1: US Patent No. 3135723
Patent Document 2: JP1983-87104A
Patent Document 3: JP1973-95490A

An object of the present invention is to provide a crosslinkable methacrylic resin monomer composition which is suitable for improving resin properties such as heat resistance, rigidity, low water absorption, chemical resistance and the like without deteriorating high transparency which a PMMA originally has. In addition, another object of the invention is to provide a resin obtained by curing the above composition, a transparent member comprising the above resin and a transparent member.

### DISCLOSURE OF THE INVENTION

In order to solve the above objects, the present inventors have conducted an extensive study and as a result, have found that a PMMA obtained by copolymerizing a compound represented by the general formula (1) can be used for solving the above object. Thus, the present invention has been completed.

That is, the present invention is specified by the matters described in the following (1) to (6).
(1) A methacrylic resin monomer composition comprising at least any of the following (A) to (C):
   (A) a methyl methacrylate monomer and/or a syrup thereof;
   (B) a compound represented by the general formula (1); and
   (C) a radical initiator, 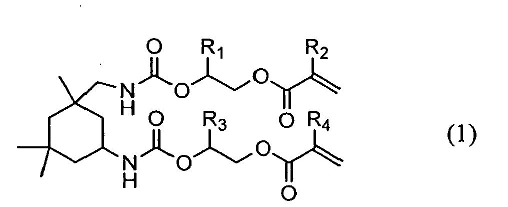
   wherein, in the formula, R₁ and R₃, and R₂ and R₄ represent hydrogen atoms or methyl groups at the same time, respectively.
(2) The methacrylic resin monomer composition as described in (1), wherein (A) as described in (1) is a methyl methacrylate syrup.
(3) The methacrylic resin monomer composition as described in (1) or (2), further comprising the following (D) in addition to (A) to (C) as described in (1) or (2),
   (D) a compound selected from a compound group represented by the general formulae (2) to (6) and (I), 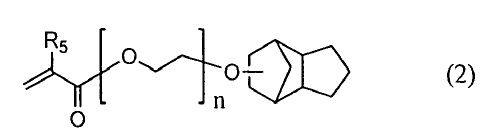
   wherein, in the formula, R₅ represents a hydrogen atom or a methyl group; and n represents an integer of 0 to 3, 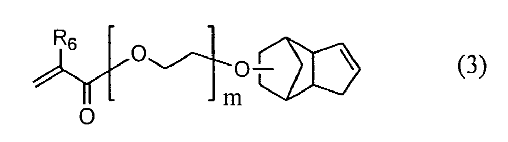 wherein, in the formula, R₆ represents a hydrogen atom or a methyl group; and m represents an integer of 0 to 3, 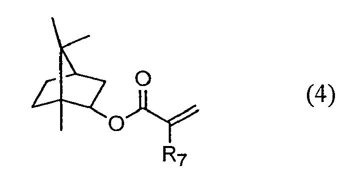 wherein, in the formula, R₇ represents a hydrogen atom or a methyl group, 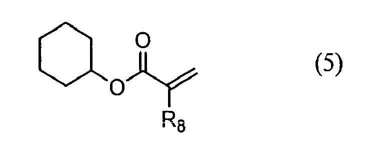 wherein, in the formula, R₈ represents a hydrogen atom or a methyl group, 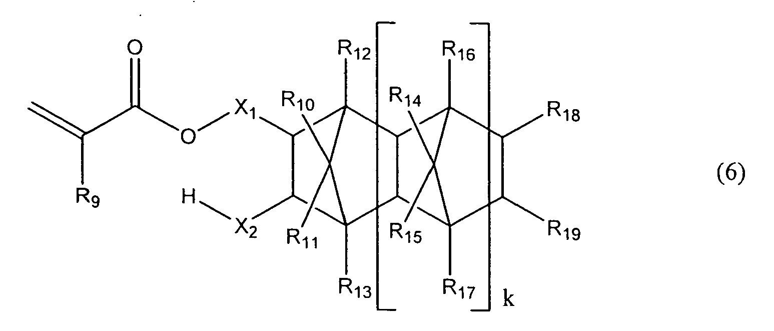 wherein, in the formula, k is an integer of 1 to 3; either X1 or X₂ is a direct bond or a lower alkylene group which may have an oxygen atom; R₉ is a hydrogen atom, a methyl group or an ethyl group; and R₁₀ to R₁₉ are each independently a hydrogen atom or a lower alkyl group, 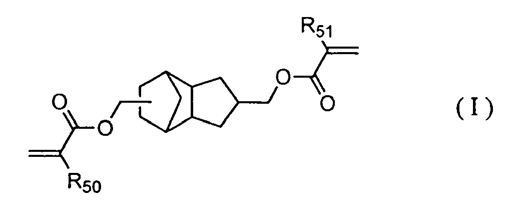 wherein, in the formula, R₅₀ and R₅₁ are each independently a hydrogen atom or a methyl group.
(4) A resin obtained by polymerizing the composition as described in any one of (1) to (3).
(5) A molded article comprising the resin as described in (4).
(6) A transparent member comprising the molded article as described in (5).
(7) An optical member comprising the transparent member as described in (6).

According to the present invention, it is possible to obtain a crosslinkable methacrylic resin composition which is suitable for improving resin properties such as heat resistance, rigidity, low water absorption, chemical resistance and the like without deteriorating excellent transparency which a PMMA originally has. Furthermore, it is possible to provide a resin comprising the aforementioned resin composition, a molded article, a transparent member and an optical member.

### BEST MODE FOR CARRYING OUT THE INVENTION

The present invention will be described in more detail below.

### Crosslinkable Methacrylic Resin Monomer Composition and Resin

The crosslinkable methacrylic resin monomer composition according to the present invention is a composition comprising the following (A) to (C):
(A) a methyl methacrylate monomer and/or a syrup thereof;
(B) a compound represented by the general formula (1); and
(C) a radical initiator.
   Furthermore, in addition to (A) to (C), the composition further comprises the following (D):
(D) a compound selected from a compound group represented by the general formulae (2) to (6).

A component (A) of the present invention is described hereinafter.

In the present invention, (A) is a methyl methacrylate monomer and/or a syrup thereof, wherein "a syrup thereof" refers to a viscous solution in which a methyl methacrylate polymer is dissolved in a methyl methacrylate monomer. The methyl methacrylate polymer is obtained by partially polymerizing a methyl methacrylate monomer under predetermined heating conditions in the presence of a radical initiator such as an organic peroxide and the like. Incidentally, in the polymerization, an α,β-ethylenic unsaturated monomer (excluding methyl methacrylate) may be optionally added.

Also, the methyl methacrylate polymer is also a molding material such as a bead polymer in some cases. In any of the cases, the syrup is available either as an own product or as a commercial product.

The proportion of the methyl methacrylate monomer and its syrup may be any proportions in consideration of degree of polymerization or viscosity of the syrup, the viscosity of a mixture with the methyl methacrylate monomer, the concentration of the methyl methacrylate polymer, the polymerization shrinkage or the like.

A component (B) of the present invention is explained hereinafter.

In the present invention, (B) is a compound represented by the general formula (1), 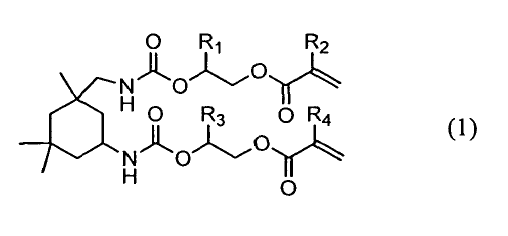 wherein, in the formula, R₁ and R₃, and R₂ and R₄ represent hydrogen atoms or methyl groups at the same time, respectively.

The compound represented by the general formula (1) includes, for example, urethane dimethacrylates which are obtained by reacting isophorone diisocyanate with hydroxy methacrylates. Herein, hydroxy methacrylates are not particularly restricted. Concrete examples thereof include 2-hydroxyethyl methacrylate and 2-hydroxypropyl methacrylate.

Concrete examples of the compound represented by the above general formula (1) include:
(1) a compound in the general formula (1), wherein R₁, R₂, R₃ and R₄ are all hydrogen atoms;
(2) a compound in the general formula (1), wherein R₁ and R₃ are methyl groups and R₂ and R₄ are hydrogen atoms;
(3) a compound in the general formula (1), wherein R₁ and R₃ are hydrogen atoms and R₂ and R₄ are methyl groups; and
(4) a compound in the general formula (1), wherein R₁, R₂, R₃, and R₄ are all methyl groups.

Among these, (3) and (4) are preferable.

Herein, the compound represented by the general formula (1) serves as a compound for crosslinking molecules of the methyl methacrylate monomer and/or the methyl methacrylate polymer in the syrup to form a PMMA of a three dimensional network structure.

A manufacturing process of the compound represented by the general formula (1) is not particularly restricted. The compound can be obtained, for example, by the urethanization reaction of isophorone diisocyanate with hydroxy (meth)acrylates. In order to facilitate the reaction, a tin compound such as dibutyltin dilaurate, dimethyltin dichloride or the like, or amines such as morpholine, dimethylaminobenzene or the like may be added. Furthermore, when a raw material or the product might be subject to polymerization during the reaction, a polymerization inhibitor may be properly added. For the purposes of enhancing efficiency in stirring and the like, any inert solvent may be used for the reaction.

The proportion of the methyl methacrylate monomer and/or a syrup thereof, and the compound represented by the general formula (1) can be arbitrary as far as the effect of the present invention can be exhibited. From the viewpoints of the effect associated with the amount added or the control of polymerization, the proportion of the compound represented by the general formula (1) is usually in the range of 5 parts by weight to 100 parts by weight, and preferably in the range of 10 parts by weight to 80 parts by weight, based on 100 parts by weight of the methyl methacrylate monomer and/or its syrup.

A component (C) of the present invention is explained hereinafter.

In the present invention, (C) is a radical initiator.

In the present invention, the radial initiator is not particularly restricted and any conventional radical initiators may be used. For the heating polymerization, known organic peroxides or azo compounds may be used. Depending on the heating conditions, an organic peroxide is, though different, usually preferably a compound having the 10-hour half-life temperature of not more than 120°C. Examples thereof include cumyl peroxyneodecanoate, di-n-propylperoxy dicarbonate, bis(2-ethylhexyl)peroxy dicarbonate, t-butyl peroxyneodecanoate, 2,4-dichlorobenzoyl peroxide, lauroyl peroxide, acetyl peroxide, t-butylperoxy-2-ethylhexanoate, benzoyl peroxide, t-butylperoxy isobutyrate, t-butylperoxy laurate, t-butylperoxy-3,5,5-trimethylhexanoate, t-butylperoxy isopropyl carbonate, t-butylperoxy acetate, t-butylperoxy benzoate, methylethylketone peroxide, dicumyl peroxide, t-butylcumyl peroxide and the like. In addition, examples of the azo compound include azobisisobutyronitrile, 2,2'-azobis(4-methoxy-2,4-dimethylvaleronitrile), azobis(methylbutylnitrile) and the like. These compounds may be used singly or in combination of two or more kinds. When two or more kinds of organic peroxides are used together, compounds which are different in the 10-hour half-life temperature from each other by 20°C or more are preferably combined from the viewpoint of efficiency in polymerization and curing, though not particularly restricted thereto.

On the other hand, a known photo-responsive compound may be used for photopolymerization. Examples thereof include benzoine, benzoine monomethylether, benzil, p-methoxybenzophenone, 2,2-diethoxyacetophenone, 2-hydorxy-2-methyl-1- phenylpropane-1-on, benzyldimethyl ketal and the like. These compounds may be used singly and in combination of two or more kinds.

The amount of the radical initiator used is preferably in the range of 0.01 weight % to 5 weight %, based on the monomer mixture. When two or more kinds are used together, it means that the total weight be in the range of 0.01 weight % to 5 weight %, based on the monomer mixture.

A component (D) of the present invention is explained hereinafter.

In the present invention, "(D) a compound selected from a compound group represented by the general formulae (2) to (6) and (I)" refers to one or more compounds selected from a compound group represented by the general formulae (2) to (6) and (I), 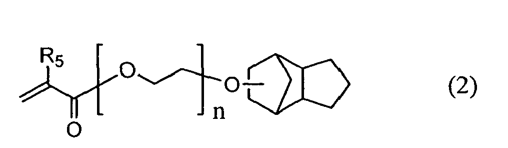 wherein, in the formula, R₅ represents a hydrogen atom or a methyl group; and n is an integer of 0 to 3, 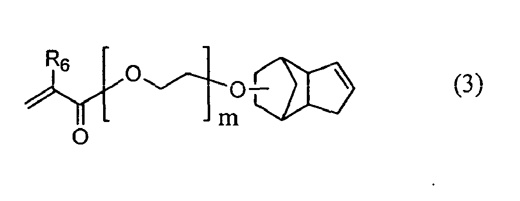 wherein, in the formula, R₆ represents a hydrogen atom or a methyl group; and m is an integer of 0 to 3, 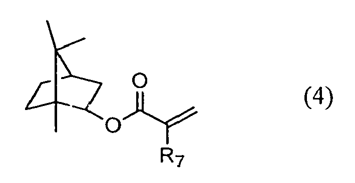 wherein, in the formula, R₇ represents a hydrogen atom or a methyl group, 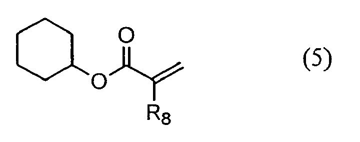 wherein, in the formula, R₈ represents a hydrogen atom or a methyl group, 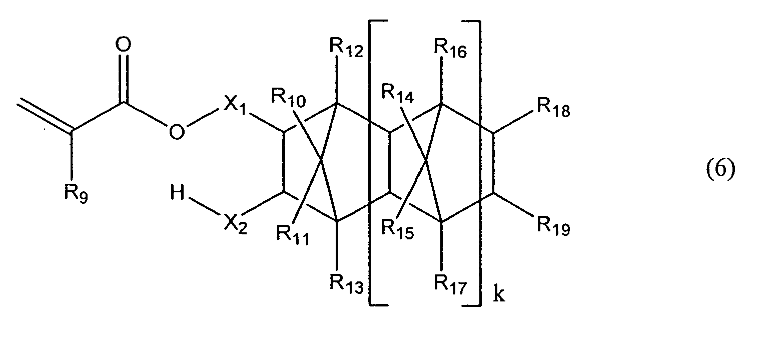 wherein, in the formula, k is an integer of 1 to 3; either X1 or X₂ is a direct bond or a lower alkylene group which may have an oxygen atom ; R₉ is a hydrogen atom, a methyl group or an ethyl group; and R₁₀ to R₁₉ are each independently a hydrogen atom or a lower alkyl group, 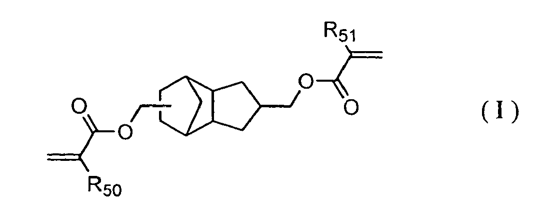 wherein, in the formula, R₅₀ and R₅₁ are each independently a hydrogen atom or a methyl group.

Each of the above compounds is explained below.

A compound represented by the general formula (2) refers, for example, to dicyclopentanyl (meth)acrylates. A compound represented by the general formula (3) refers, for example, to dicyclopentenyl (meth)acrylates. A compound represented by the general formula (4) refers, for example, to isobornyl (meth)acrylates. A compound represented by the general formula (5) refers, for example, to cyclohexyl (meth)acrylates. A compound represented by the general formula (6) refers, for example, to tetracyclododecyl (meth)acrylates. A compound represented by the general formula (I) refers to a compound with two (meth)acryloylmethyl groups bonded to dicyclopentane.

Concrete examples of the compound represented by the general formula (2) include, though not restricted to, dicyclopentanyl acrylate, dicyclopentanyl methacrylate, 2-(dicyclopentanyloxy)ethyl acrylate, 2-(dicyclopentanyloxy)ethyl methacrylate, 2-(dicyclopentanyloxy)ethyl-2'-(acryloyloxy)ethylether, 2-(dicyclopentanyloxy)ethyl-2'-(methacryloyloxy)ethylether, 2-{2-(dicyclopentanyloxy)ethyloxy}-1-{2'-(acryloyloxy)ethyloxy}ethane, 2-{2-(dicyclopentanyloxy)ethyloxy}-1-{2'-(methacryloyloxy)ethyloxy}ethane and the like.

Concrete examples of the compound represented by the general formula (3) include, though not restricted to, dicyclopentenyl acrylate, dicyclopentenyl methacrylate, 2-(dicyclopentenyloxy)ethyl acrylate, 2-(dicyclopentenyloxy)ethyl methacrylate, 2-(dicyclopentenyloxy)ethyl-2'-(acryloyloxy)ethylether, 2-(dicyclopentenyloxy)ethyl-2'-(methacryloyloxy)ethylether, 2-{2-(dicyclopentenyloxy)ethyloxy}-1-{2'-(acryloyloxy)ethyloxy}ethane, 2-{2-(dicyclopentenyloxy)ethyloxy}-1-{2'-(methacryloyloxy)ethyloxy}ethane and the like.

Concrete examples of the compound represented by the general formula (4) include isobornyl acrylate and isobornyl methacrylate.

Concrete examples of the compound represented by the general formula (5) include cyclohexyl acrylate and cyclohexyl methacrylate.

Concrete examples of the compound represented by the general formula (6) include, though not restricted to, compounds represented by the general formulae (7) to (34), 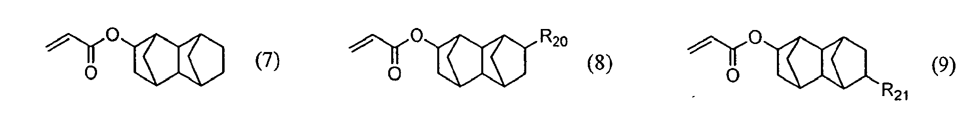 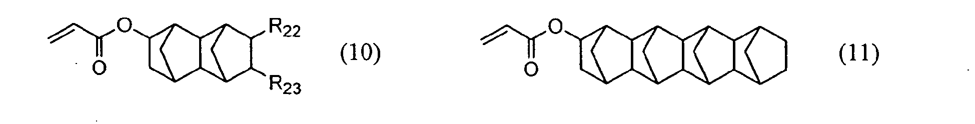 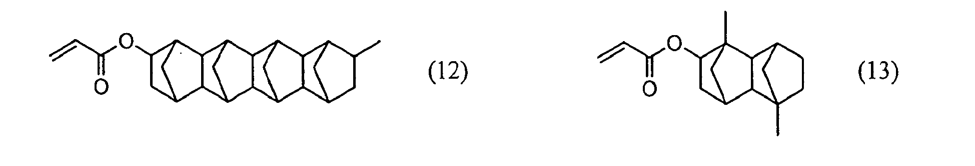 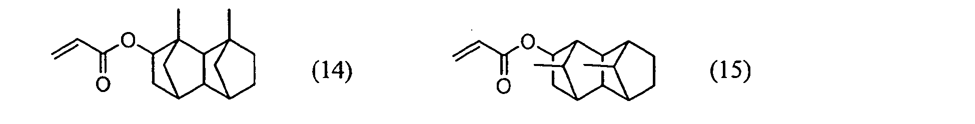 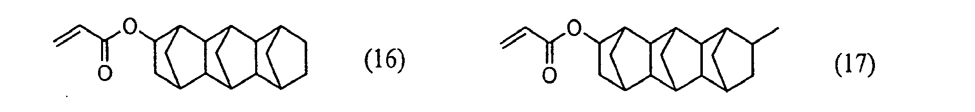 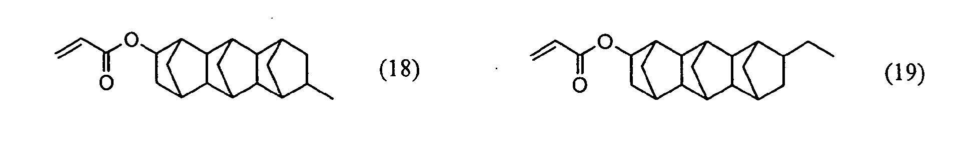 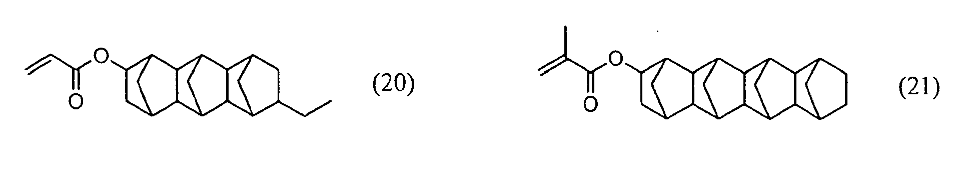 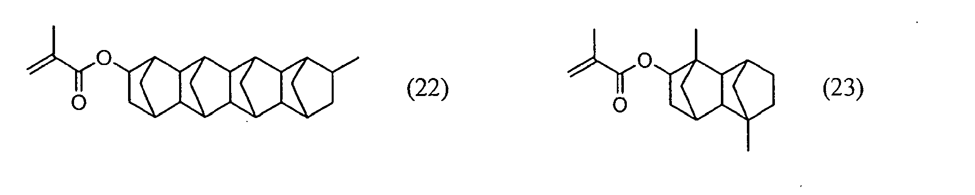 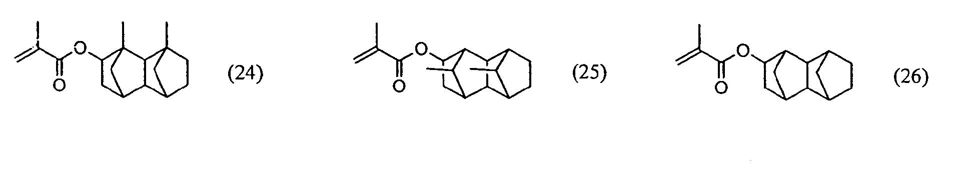 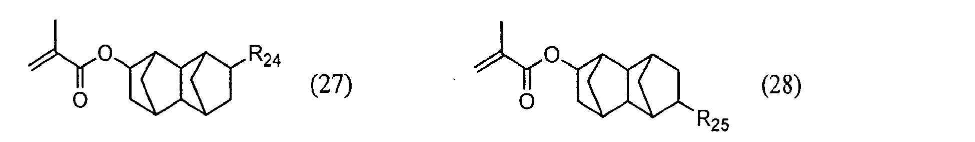 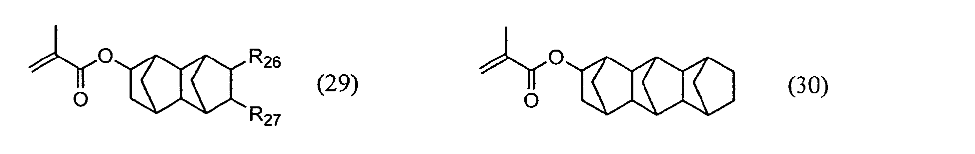 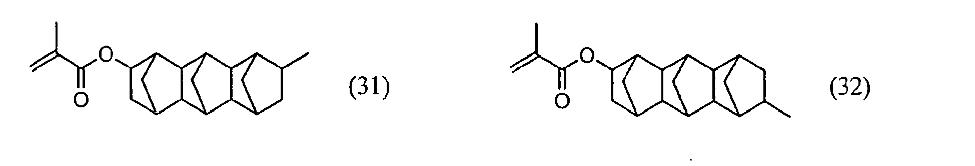 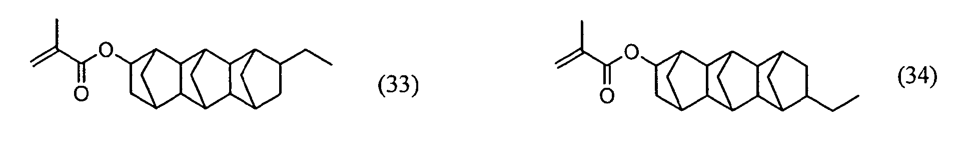 wherein, in the formula, R₂₀ to R₂₇ are each independently a methyl group, an ethyl group, a propyl group, an isobutyl group, a hexyl group, a cyclohexyl group or a stearyl group.

Concrete examples of the compound represented by the general formula (I) include, though not restricted to, compounds represented by the formulae (II) and (III).

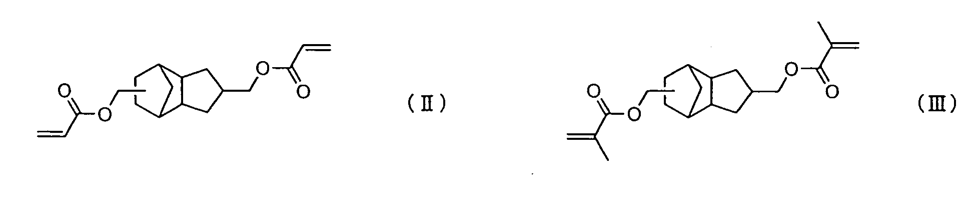

Of the compounds selected from a compound group represented by the general formulae (2) to (6) and (I), preferable are dicyclopentanyl acrylate, dicyclopentanyl methacrylate, 2-(dicyclopentanyloxy)ethyl acrylate, 2-(dicyclopentanyloxy)ethyl methacrylate, dicyclopentenyl acrylate, dicyclopentenyl methacrylate, isobornyl acrylate, isobornyl methacrylate, cyclohexyl acrylate, cyclohexyl methacrylate, a compound represented by the formula (7) and a compound represented by the formula (26).

By copolymerizing a compound selected from a compound group represented by the general formulae (2) to (6) and (I) with an MMA monomer and/or an MMA syrup, and a compound represented by the general formula (1), a PMMA having low water absorption is obtained.

The proportion of the compound selected from a compound group represented by the general formulae (2) to (6) and (I) is arbitrary as far as the effect of the present invention can be exhibited. It is usually preferably in the range of 5 parts by weight to 50 parts by weight, and more preferably in the range of 10 parts by weight to 40 parts by weight, based on 100 parts by weight of the methyl methacrylate monomer and/or its syrup from the viewpoint of the effect associated with the proportion of the used compound or the control of polymerization and curing reactions.

Furthermore, in the methacrylic resin monomer composition of the present invention, as needed, other polymerizable monomers may be used. Further, a light stabilizer, an anti-oxidant, an anti-static agent, an anti-fogging agent, a colorant or the like may be properly added.

Of these, the light stabilizer is not particularly restricted, but a hindered amine based light stabilizer represented by the general formulae (35) and (36) can be preferably cited. 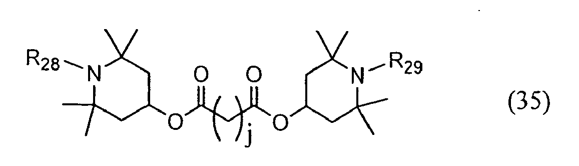 wherein, in the formula, R₂₈ and R₂₉ represent hydrogen atoms or methyl groups at the same; and j represents an integer of 1 to 8, 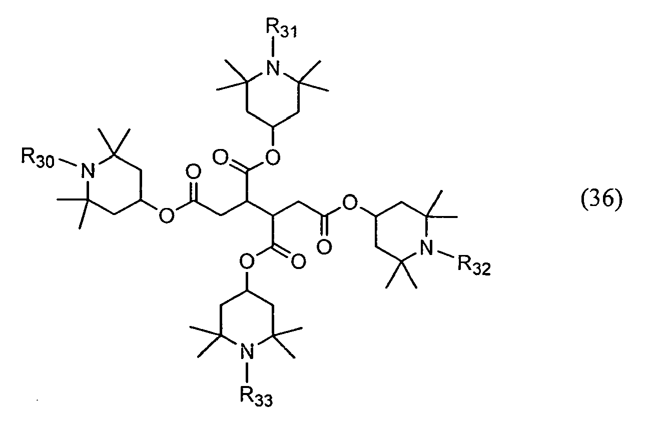 wherein, in the formula, R₃₀ to R₃₃ represent hydrogen atoms or methyl groups at the same time.

Since these compounds have a function of suppressing an initiation reaction and a function of suspending a chain reaction of automatic oxidation cycle of a polymer, they are also useful as a primary anti-oxidant. Of the compounds represented by the general formulae (35) and (36), a compound, which have good compatibility with monomers of the present invention and exhibit a remarkable effect in preventing oxidation is more preferably, such as bis-(2,2,6,6-tetramethyl-4-piperidinyl)sebacate, bis-(N-methyl-2,2,6,6-tetramethyl-4-piperidinyl)sebacate, and tetrakis(2,2,6,6-tetramethyl-4-piperazinyl)-1,2,3,4-butane-tetracarboxylate.

The proportion of these compounds used is not particularly restricted. It is usually from 0.03 weight % to 2.00 weight %, based on the monomer composition. It is preferably from 0.05 weight % to 1.50 weight %. When the amount is less than 0.03 weight %, it might be difficult to expect an effect in preventing the primary oxidation. When the amount exceeds 2.00 weight %, it might be difficult to expect more than such an effect.

The anti-oxidant is not particularly restricted. A phosphite type anti-oxidant is also preferable, as well as the compounds represented by the general formulae (35) and (36) as described above. The phosphite type anti-oxidant is effective in suppressing the secondary oxidation. Concrete examples thereof include tris(2,6-di-t-butylphenyl) phosphite, tetraphenyl dipropylene glycol diphosphite, tetraphenyl tetra(tridecyl) pentaerythritol tetraphosphite, tetra(tridecyl)-4,4'-isopropylidenediphenyl diphosphite, bis(tridecyl) pentaerythritol diphosphite, bis(nonylphenyl) pentaerythritol diphosphite, distearyl pentaerythritol diphosphite, 2,2'-methylenebis(4,6-di-t-butylphenyl)isooctyl phosphite, bis(2,6-di-t-butylphenyl) pentaerythritol diphosphite and bis(2,6-di-t-butyl-4-methylphenyl) pentaerythritol diphosphite. Of these, tris(2,6-di-t-butylphenyl) phosphite and tetraphenyl tetra(tridecyl) pentaerythritol tetraphosphite are more preferable.

The proportion of these compounds used is not particularly restricted. It is usually from 0.03 weight % to 2.00 weight %, and preferably from 0.05 weight % to 1.50 weight %, based on the monomer composition.

By employing the compounds represented by the general formulae (35) and (36) together with the aforementioned phosphite type anti-oxidant, much higher effect in preventing oxidation can be obtained.

The resin composition thus prepared is cured according to a predetermined polymerization method by degassing right before polymerization or without degassing, to obtain a crosslinkable methacrylic resin.

### Resin Molded Article and Method for Preparing the Molded Article

In the present invention, polymerization and curing of the resin monomer composition are not particularly restricted and any of conventionally known methods may be employed. For example, a casting polymerization may be performed in the following manner. In the casting polymerization, a mold release agent is not needed, but if employed, an internal mold release agent is easily employable. Such an internal mold release agent may be selected from usual mold release agents such as silicon type, fluorine type, wax type, aliphatic metallic soap type, acidic phosphate type and the like. The amount thereof is preferably in the range of 0.02 weight % to 0.3 weight %, based on the monomer mixture.

The casting polymerization by heating is a method of polymerization wherein a resin composition prepared in advance is fed into the cavity of a mold having a desired shape for a resin molded article, the resultant is cured by heating, and then the resin molding is taken out from the mold, to obtain a molded article. In order to obtain a planar resin molded article, a flat mold is used. Herein, the above mold is generally formed by arranging a sheet or tube, as the gasket, made of a vinyl chloride resin or a silicon resin having a specific thickness formed at the edge portion of a flat glass plate or a stainless plate without having a curvature, and another sheet of a glass plate or a stainless plate formed at the other side of the glass plate or the stainless plate.

The heating temperature for the casting polymerization by heating is different depending on the type or the amount of the monomer mixture and radical initiator, but it is usually preferably from 40°C to 170°C. More specifically, the temperature at the initial stage of heating is preferably not less than 40°C, more preferably not less than 50°C, and further preferably not less than 60°C. The temperature at the final stage of heating is preferably not more than 170°C, more preferably not more than 150°C, and further preferably not more than 130°C.

The time required for heating for the casting polymerization by heating is different depending on the heating temperature, but it is usually from 3 hours to 7 hours, and preferably from 3 hours to 5 hours.

Furthermore, for the resin and molded article in the present invention, an index of the transparency is that there is no haze observed when a resin plate is shed light with a fluorescent lamp. On the other hand, Tg (TMA method), an index of heat resistance, is usually not less than 130°C, preferably not less than 135°C, and more preferably not less than 140°C. Furthermore, for example, the water absorption ratio, an index of water absorption in a resin plate having a thickness of 2 mm according to ASTM D570 is usually not more than 0.51 %, preferably not more than 0.47 %, and more preferably not more than 0.43 %. The flexural modulus, an index of rigidity, is usually not less than 3.2 GPa, preferably not less than 3.6 GPa, and more preferably not less than 4.0 GPa. In addition, an index of chemical resistance is that the resin and the molded article are resistant to corrosive action by an organic solvent such as acetone, toluene or the like, an inorganic basic solution such as caustic soda or the like, or an aqueous solution of an inorganic acid such as sulfuric acid or the like.

### EXAMPLES

The present invention is now more specifically illustrated below with reference to Examples. However, the present invention is not restricted to these Examples.

### <Evaluation method>

Respective physical properties of the resins (molded articles) are evaluated as follows.
- Surface condition
   Wakame phenomenon (phenomenon wherein the resin surface becomes barky and disorderly due to wrinkle) was visually inspected according to the following criteria:
   ○: nothing observed,
   Δ: Partly observed, and
   x: Observed at almost all surfaces.
- Transparency
   A resin plate was shed light with a fluorescent lamp and visually inspected according to the following criteria:
   ○: no haze observed,
   Δ: light haze observed according to angles of light, and
   x: haze surely observed.
- Heat resistance
   Tg was measured by the use of a TMA analyzer (TAS300) manufactured by Rigaku Corporation.
- Rigidity
   The flexural modulus was measured in accordance with JIS K7171.
- Chemical resistance
   Each of acetone, toluene, 10% NaOH aqueous solution and 10% sulfuric acid solution was tested in accordance with JIS K7114 and visually inspected according to the following criteria:
   ○: nothing unusual observed,
   Δ: swelling/crack occurred, and
   X: dissolved.
- Water absorption
   The water absorption ratio was measured in accordance with ASTM D570.
- Hue (or Color)
   YI of a resin plate having a thickness of 1 mm was measured by the use of a colorimeter (CR-300) manufactured by Konica Minolta Co., Ltd.
- Change in hue(or color) according to the heating time
   A resin plate having a thickness of 1 mm was put in a drier (air circulation type) at 120°C for a week. Thereafter, YI was measured to calculate the change ratio relative to YI before heating.

### (Synthesis Example 1) (all parts are by weight)

### Synthesis of a compound (IP-EM) represented by the general formula (1), wherein R1 and R3 are hydrogen atoms; and R2 and R4 are methyl groups

200 parts of isophorone diisocyanate, 0.2 part of dibutyltin dilaurate as a catalyst and 0.13 part of 2,6-di-t-butyl-4-methylphenol (BHT) as a polymerization inhibitor were charged in a flask, heated and stirred. Thereinto was dropped 234 parts of 2-hydroxyethyl methacrylate over 2 hours by using a dropping funnel while maintaining the temperature of the solution at 65°C to 75°C, and then, the resulting solution was further stirred at the same temperature for 8 hours to carry out the reaction. Completion of the reaction was determined by measuring the equivalent of isocyanate according to the titrimetric method. The reaction was completed at a point of time when not less than 97% of an isocyanate group was observed to be consumed. Furthermore, the identification of the product was carried out by H-NMR and mass spectrometry.

### (Synthesis Example 2) (all parts are by weight)

### Synthesis of a compound (IP-PM) represented by the general formula (1), wherein R₁, R₂, R₃, and R₄ are all methyl groups

The titled compound was obtained in the same manner as in Synthesis Example 1, except that 234 parts of 2-hydroxyethyl methacrylate used in Synthesis Example 1 was replaced by 259 parts of 2-hydroxypropyl methacrylate. The identification of the product was carried out by H-NMR and mass spectrometry.

### (Synthesis Example 3) (all parts are by weight)

### Synthesis of a compound (IP-PA) represented by the general formula (1), wherein R₁ and R₃ are methyl groups; and R₂ and R₄ are hydrogen atoms

The titled compound was obtained in the same manner as in Synthesis Example 1, except that 234 parts of 2-hydroxyethyl methacrylate used in Synthesis Example 1 was replaced by 234 parts of 2-hydroxypropyl acrylate. The identification of the product was carried out by H-NMR and mass spectrometry.

### Example 1

To a mixed solution of 30 parts by weight of an MMA monomer, 70 parts by weight of an MMA partial polymerization syrup (CX-1033, a product of Mitsui Chemicals, Inc.) and 5 parts by weight of the compound (IP-EM) in Synthesis Example 1 was added 0.32 part by weight of t-butylperoxy-2-ethylhexanoate as a radical initiator, and the resulting solution was mixed at a room temperature and then subjected to degassing to prepare for polymerization.

The composition thus obtained was fed into a mold for casting polymerization with a vinyl chloride gasket formed on a glass plate of a 200-mm square and having a clearance of 2 mm. Then, the resultant was heated in a hot-air circulating reactor at 60°C for 2 hours and subsequently heated at 130°C for an hour to carry out polymerization. While polymerizing, nothing unusual was observed and a molding was easily taken out from the mold. Accordingly, a transparent resin plate showing a good surface condition was obtained.

### Example 2

To a mixed solution of 65 parts by weight of an MMA monomer, 35 parts by weight of an MMA partial polymerization syrup (CX-1033, a product of Mitsui Chemicals, Inc.) and 40 parts by weight of the compound (IP-EM) in Synthesis Example 1 were added 0.42 part by weight of cumyl peroxyneodecanoate and 0.14 part by weight of t-butylperoxy-2-ethylhexanoate as radical initiators, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for 2 hours to carry out polymerization. While polymerizing, nothing unusual was observed and a molding was easily taken out from the mold. Accordingly, a transparent resin plate showing a good surface condition was obtained.

### Example 3

To a mixed solution of 90 parts by weight of an MMA monomer, 10 parts by weight of an MMA bead polymer syrup (SY-102C, a product of Mitsubishi Rayon Co., Ltd.) and 70 parts by weight of the compound (IP-EM) in Synthesis Example 1 was added 0.51 part by weight of t-butylperoxy-3,5,5-trimethylhexanoate as a radical initiator, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 140°C for 2 hours to carry out polymerization. While polymerizing, nothing unusual was observed and a molding was easily taken out from the mold. Accordingly, a transparent resin plate showing a good surface condition was obtained.

### Example 4

To a mixed solution of 100 parts by weight of an MMA monomer and 12 parts by weight of the compound (IP-PM) in Synthesis Example 2 were added 0.22 part by weight of 2,2'-azobis(4-methoxy-2,4-dimethylvaleronitrile) and 0.11 part by weight of t-butylperoxy isobutyrate as radical initiators, and 0.11 part by weight of an acidic phosphate based mold release agent (ZELEC UN, a product of Du Pont Kabushiki Kaisha) as a mold release agent, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for an hour to carry out polymerization. While polymerizing, nothing unusual was observed and a molding was easily taken out from the mold. Accordingly, a transparent resin plate showing a good surface condition was obtained.

### Example 5

To a mixed solution of 70 parts by weight of an MMA monomer, 30 parts by weight of an MMA partial polymerization syrup (CX-1033, a product of Mitsui Chemicals, Inc.) and 25 parts by weight of the compound (IP-PM) in Synthesis Example 2 were added 0.25 part by weight of cumyl peroxydecanoate and 0.25 part by weight of benzoyl peroxide as radical initiators, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for 2 hours to carry out polymerization. While polymerizing, nothing unusual was observed and a molding was easily taken out from the mold. Accordingly, a transparent resin plate showing a good surface condition was obtained.

### Example 6

To a mixed solution of 20 parts by weight of an MMA monomer, 80 parts by weight of an MMA partial polymerization syrup (CX-1 033, a product of Mitsui Chemicals, Inc.) and 30 parts by weight of the compound (IP-PM) in Synthesis Example 2 was added 0.65 part by weight of benzoyl peroxide as a radical initiator, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 130°C for 2 hours to carry out polymerization. While polymerizing, nothing unusual was observed and a molding was easily taken out from the mold. Accordingly, a transparent resin plate showing a good surface condition was obtained.

### Example 7

To a mixed solution of 80 parts by weight of an MMA monomer, 20 parts by weight of an MMA bead polymer syrup (SY-102C, a product of Mitsubishi Rayon Co., Ltd.) and 45 parts by weight of the compound (IP-PM) in Synthesis Example 2 were added 0.29 part by weight of t-butylperoxy-2-ethylhexanoate and 0.15 part by weight of dicumyl peroxide as radical initiators, and 0.15 part by weight of an acidic phosphate based mold release agent (ZELEC UN, a product of Du Pont Kabushiki Kaisha) as a mold release agent, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 140°C for 2 hours to carry out polymerization. While polymerizing, nothing unusual was observed and a molding was easily taken out from the mold. Accordingly, a transparent resin plate showing a good surface condition was obtained.

### Example 8

To a mixed solution of 50 parts by weight of an MMA monomer, 50 parts by weight of an MMA partial polymerization syrup (CX-1033, a product of Mitsui Chemicals, Inc.) and 20 parts by weight of the compound (IP-PA) in Synthesis Example 3 were added 0.48 part by weight of azobisisobutyronitrile and 0.16 part by weight of t-butylperoxy-3,5,5-trimethylhexanoate as radical initiators, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 140°C for an hour to carry out polymerization. While polymerizing, nothing unusual was observed and a molding was easily taken out from the mold. Accordingly, a transparent resin plate showing a good surface condition was obtained.

### Example 9

To a mixed solution of 30 parts by weight of an MMA monomer, 70 parts by weight of an MMA partial polymerization syrup (CX-1033, a product of Mitsui Chemicals, Inc.), 30 parts by weight of the compound (IP-EM) in Synthesis Example 1 and 20 parts by weight of dicyclopentanyl acrylate (DPtaA) were added 0.30 part by weight of cumyl peroxyneodecanoate and 0.15 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for an hour to carry out polymerization. While polymerizing, nothing unusual was observed and a molding was easily taken out from the mold. Accordingly, a transparent resin plate showing a good surface condition was obtained.

### Example 10

To a mixed solution of 60 parts by weight of an MMA monomer, 40 parts by weight of an MMA partial polymerization syrup (CX-1 033, a product of Mitsui Chemicals, Inc.), 40 parts by weight of the compound (IP-EM) in Synthesis Example 1 and 25 parts by weight of dicyclopentanyl methacrylate (DPtaMA) were added 0.33 part by weight of cumyl peroxyneodecanoate and 0.16 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for an hour to carry out polymerization. While polymerizing, nothing unusual was observed and a molding was easily taken out from the mold. Accordingly, a transparent resin plate showing a good surface condition was obtained.

### Example 11

To a mixed solution of 50 parts by weight of an MMA monomer, 50 parts by weight of an MMA partial polymerization syrup (CX-1033, a product of Mitsui Chemicals, Inc.), 40 parts by weight of the compound (IP-EM) in Synthesis Example 1 and 30 parts by weight of 2-(dicyclopentanyloxy)ethyl methacrylate (DPtaOMA) were added 0.51 part by weight of benzoyl peroxide and 0.17 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 140°C for an hour to carry out polymerization. While polymerizing, nothing unusual was observed and a molding was easily taken out from the mold. Accordingly, a transparent resin plate showing a good surface condition was obtained.

### Example 12

To a mixed solution of 40 parts by weight of an MMA monomer and 60 parts by weight of an MMA bead polymer syrup (SY-102C, a product of Mitsubishi Rayon Co., Ltd.), 30 parts by weight of the compound (IP-EM) in Synthesis Example 1 and 40 parts by weight of isobornyl acrylate (IBA) were added 0.51 part by weight of 2,2'-azobis(4-methoxy-2,4-dimethylvaleronitrile) and 0.17 part by weight of t-butylperoxy-2-ethylhexanoate as radical initiators, and 0.08 part by weight of an acidic phosphate based mold release agent (ZELEC UN, a product of Du Pont Kabushiki Kaisha) as a mold release agent, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 2 hours, subsequently heated at 90°C for an hour, and finally heated at 130°C for an hour to carry out polymerization. While polymerizing, nothing unusual was observed and a molding was easily taken out from the mold. Accordingly, a transparent resin plate showing a good surface condition was obtained.

### Example 13

To a mixed solution of 70 parts by weight of an MMA monomer, 30 parts by weight of an MMA partial polymerization syrup (CX-1033, a product of Mitsui Chemicals, Inc.), 50 parts by weight of the compound (IP-PM) in Synthesis Example 2 and 30 parts by weight of dicyclopentanyl methacrylate (DPtaMA) was added 0.72 part by weight of benzoyl peroxide as a radical initiator, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 4 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 14

To a mixed solution of 20 parts by weight of an MMA monomer, 80 parts by weight of an MMA partial polymerization syrup (CX-1 033, a product of Mitsui Chemicals, Inc.), 30 parts by weight of the compound (IP-PM) in Synthesis Example 2 and 20 parts by weight of isobornyl methacrylate (IBMA) were added 0.30 part by weight of t-butylperoxy-2-ethylhexanoate and 0.15 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 15

To a mixed solution of 90 parts by weight of an MMA monomer, 10 parts by weight of an MMA partial polymerization syrup (CX-1033, a product of Mitsui Chemicals, Inc.), 70 parts by weight of the compound (IP-PM) in Synthesis Example 2 and 40 parts by weight of cyclohexyl acrylate (CHA) were added 0.63 part by weight of benzoyl peroxide and 0.21 part by weight of dicumyl peroxide as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours, subsequently heated at 90°C for an hour, and finally heated at 140°C for 2 hours to carry out polymerization. While polymerizing, nothing unusual was observed and a molding was easily taken out from the mold. Accordingly, a transparent resin plate showing a good surface condition was obtained.

### Example 16

To a mixed solution of 50 parts by weight of an MMA monomer, 50 parts by weight of an MMA partial polymerization.syrup (CX-1033, a product of Mitsui Chemicals, Inc.), 35 parts by weight of the compound (IP-PM) in Synthesis Example 2 and 25 parts by weight of cyclohexyl methacrylate (CHMA) were added 0.48 part by weight of azobisisobutyronitrile and 0.16 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 17

To a mixed solution of 25 parts by weight of an MMA monomer, 75 parts by weight of an MMA partial polymerization syrup (CX-1 033, a product of Mitsui Chemicals, Inc.) and 25 parts by weight of the compound (IP-PM) in Synthesis Example 2 were added 0.25 part by weight of t-butylperoxy-2-ethylhexanoate and 0.13 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 130°C for 2 hours to carry out polymerization. While polymerizing, nothing unusual was observed and a molding was easily taken out from the mold. Accordingly, a transparent resin plate showing a good surface condition was obtained.

### Example 18

To a mixed solution of 60 parts by weight of an MMA monomer, 40 parts by weight of an MMA partial polymerization syrup (CX-1 033, a product of Mitsui Chemicals, Inc.) and 20 parts by weight of the compound (IP-EM) in Synthesis Example 1 were added 0.60 part by weight of bis-(2,2,6,6-tetramethyl-4-piperidinyl)sebacate (Sanol LS-770, a product of Sankyo Co., Ltd.) as a light stabilizer, 0.36 part by weight of cumyl peroxyneodecanoate and 0.18 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for an hour to carry out polymerization. While polymerizing, nothing unusual was observed and a molding was easily taken out from the mold. Accordingly, a transparent resin plate showing a good surface condition was obtained.

### Example 19

To a mixed solution of 50 parts by weight of an MMA monomer, 50 parts by weight of an MMA partial polymerization syrup (CX-1 033, a product of Mitsui Chemicals, Inc.) and 40 parts by weight of the compound (IP-EM) in Synthesis Example 1 were added 0.42 part by weight of bis-(N-methyl-2,2,6,6-tetramethyl-4-piperidinyl)sebacate (Sanol LS-765, a product of Sankyo Co., Ltd.) as a light stabilizer, 0.28 part by weight of tris(2,6-di-t-butylphenyl) phosphite (JP-650, a product of Johoku Chemical Co., Ltd.) as a phosphite type anti-oxidant, 0.42 part by weight of cumyl peroxyneodecanoate and 0.14 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for 2 hours to carry out polymerization. While polymerizing, nothing unusual was observed and a molding was easily taken out from the mold. Accordingly, a transparent resin plate showing a good surface condition was obtained.

### Example 20

To a mixed solution of 70 parts by weight of an MMA monomer, 30 parts by weight of an MMA partial polymerization syrup (CX-1033, a product of Mitsui Chemicals, Inc.) and 25 parts by weight of the compound (IP-PM) in Synthesis Example 2 were added 0.50 part by weight of bis-(2,2,6,6-tetramethyl-4-piperidinyl)sebacate (Sanol LS-770, a product of Sankyo Co., Ltd.) as a light stabilizer, 0.38 part by weight of tetraphenyl-tetra(tridecyl)-pentaerythritol-tetraphosphite (JPP-613M, a product of Johoku Chemical Co., Ltd.) as a phosphite type anti-oxidant, 0.50 part by weight of benzoyl peroxide and 0.25 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 140°C for an hour to carry out polymerization. While polymerizing, nothing unusual was observed and a molding was easily taken out from the mold. Accordingly, a transparent resin plate showing a good surface condition was obtained.

### Example 21

To a mixed solution of 90 parts by weight of an MMA monomer, 10 parts by weight of an MMA partial polymerization syrup (CX-1033, a product of Mitsui Chemicals, Inc.) and 50 parts by weight of the compound (IP-PM) in Synthesis Example 2 were added 0.30 part by weight of tetrakis(2,2,6,6-tetramethyl-4-piperazinyl)-1,2,3,4-butane-tetracarboxylate (ADKSTAB LA-570, a product of Asahi Denka Co., Ltd.) as a light stabilizer, 0.45 part by weight of 2,2'-azobis(4-methoxy-2,4-dimethylvaleronitrile) and 0.15 part by weight of t-butylperoxy isobutyrate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 4 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 22

To a mixed solution of 90 parts by weight of an MMA monomer, 10 parts by weight of an MMA partial polymerization syrup (CX-1033, a product of Mitsui Chemicals, Inc.) and 50 parts by weight of the compound (IP-PM) in Synthesis Example 2 were added 0.45 part by weight of 2,2'-azobis(4-methoxy-2,4-dimethylvaleronitrile) and 0.15 part by weight of t-butylperoxy isobutyrate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 4 hours, and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 23

To a mixed solution of 100 parts by weight of an MMA monomer, 30 parts by weight of the compound (IP-PM) in Synthesis Example 2 and 20 parts by weight of the compound in the formula (26) were added 0.30 part by weight of t-butylperoxy-2-ethylhexanoate and 0.15 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 60°C for 3 hours, and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 24

To a mixed solution of 90 parts by weight of an MMA monomer, 10 parts by weight of an MMA partial polymerization syrup (CX-1033, a product of Mitsui Chemicals, Inc.), 30 parts by weight of the compound (IP-PM) in Synthesis Example 2 and 20 parts by weight of the compound in the formula (26) were added 0.30 part by weight of t-butylperoxy-2-ethylhexanoate and 0.15 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Example 25

To a mixed solution of 50 parts by weight of an MMA monomer, 50 parts by weight of an MMA partial polymerization syrup (CX-1033, a product of Mitsui Chemicals, Inc.), 35 parts by weight of the compound (IP-PM) in Synthesis Example 2 and 25 parts by weight of the compound represented by the formula (III) were added 0.48 part by weight of azobisisobutyronitrile and 0.16 part by weight of t-butylperoxy-3,5,5-trimethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 120°C for 2 hours to carry out polymerization. While polymerizing, nothing unusual was observed and a molding was easily taken out from the mold. Accordingly, a transparent resin plate showing a good surface condition was obtained.

### Comparative Example 1

To a mixed solution of 80 parts by weight of an MMA monomer and 20 parts by weight of an MMA partial polymerization syrup (CX-1033, a product of Mitsui Chemicals, Inc.) were added 0.3 part by weight of lauroyl peroxide and 0.2 part by weight of benzoyl peroxide as radical initiators, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 50°C for 3 hours, subsequently heated at 80°C for an hour and finally heated at 130°C for an hour to carry out polymerization. While maintaining polymerization at 80°C, wakame phenomenon near the gasket occurred. Accordingly, a transparent resin plate showing a good surface condition excluding wakame phenomenon-occurred portion was obtained.

### Comparative Example 2

To a mixed solution of 75 parts by weight of an MMA monomer, 25 parts by weight of an MMA partial polymerization syrup (CX-1033, a product of Mitsui Chemicals, Inc.) and 25 parts by weight of neopentyl glycol dimethacrylate (N-M) was added 0.5 part by weight of t-butylperoxy isobutyrate as a radical initiator, and the resulting solution was mixed at a room temperature and then subjected to degassing to prepare for polymerization.

The composition thus obtained was fed into a mold for casting polymerization as described in Example 1. Then, the resultant was heated in a hot-air circulating reactor at 60°C for 3 hours and subsequently heated at 140°C for an hour to carry out polymerization. While maintaining polymerization at 60°C, a little of wakame phenomenon occurred. However, a transparent resin plate showing a mostly good surface condition after taking a molding out from the mold was obtained.

### Comparative Example 3

To a mixed solution of 30 parts by weight of an MMA monomer and 70 parts by weight of an MMA partial polymerization syrup (CX-1033, a product of Mitsui Chemicals, Inc.) were added 0.20 part by weight of cumyl peroxyneodecanoate and 0.10 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 2 hours, subsequently heated at 80°C for an hour and finally heated at 120°C for 2 hours to carry out polymerization. While polymerizing, nothing unusual was observed and a molding was easily taken out from the mold. Accordingly, a transparent resin plate showing a good surface condition was obtained.

### Comparative Example 4

To a mixed solution of 60 parts by weight of an MMA monomer and 40 parts by weight of an MMA partial polymerization syrup (CX-1 033, a product of Mitsui Chemicals, Inc.) were added 0.36 part by weight of cumyl peroxyneodecanoate and 0.18 part by weight of t-butylperoxy-2-ethylhexanoate as radical initiators, and the resulting solution was stirred and mixed at a room temperature for 30 minutes, and then subjected to degassing to prepare for polymerization.

The composition thus obtained was fed into a mold for casting polymerization as described in Example 1. Then, the resultant was heated in a hot-air circulating reactor at 50°C for 3 hours and subsequently heated at 130°C for an hour to carry out polymerization. While polymerizing, nothing unusual was observed and a molding was easily taken out from the mold. Accordingly, a transparent resin plate showing a good surface condition was obtained.

The physical properties of the resins (molded articles) according to Examples 1 to 25 and Comparative Examples 1 to 4 are set forth in Table 1.

**[Table 1] Physical Properties of Resins (Molded Articles)**

| | Surface condition | Transparency | Heat resistance Tg [°C] | Rigidity (flexural modulus) [GPa] | Chemical resistance | | | | Water absorption [%] | Hue(or Color) (YI) | | |
|---|---|---|---|---|---|---|---|---|---|---|---|---|
| | | | | | Acetone | Toluene | 10% NaOH solution | 10% sulfuric acid solution | | Before heating | After heating | Change ratio [%] |
| Example 1 | ○ | ○ | 131 | 3.0 | Δ | ○ | ○ | ○ | - | - | - | - |
| Example 2 | ○ | ○ | 141 | 3.8 | ○ | ○ | ○ | ○ | - | - | - | - |
| Example 3 | ○ | ○ | 145 | 4.1 | ○ | ○ | ○ | ○ | - | - | - | - |
| Example 4 | ○ | ○ | 133 | 3.3 | Δ | ○ | ○ | ○ | - | - | - | - |
| Example 5 | ○ | ○ | 140 | 3.6 | ○ | ○ | ○ | ○ | - | 4.22 | 4.47 | +5.92 |
| Example 6 | ○ | ○ | 142 | 3.7 | ○ | ○ | ○ | ○ | - | - | - | - |
| Example 7 | ○ | ○ | 144 | 3.8 | ○ | ○ | ○ | ○ | - | - | - | - |
| Example 8 | ○ | Δ | 134 | 3.4 | ○ | ○ | ○ | ○ | - | - | - | - |
| Example 9 | ○ | ○ | 137 | 3.2 | ○ | ○ | ○ | ○ | 0.47 | - | - | - |
| Example 10 | ○ | ○ | 139 | 3.3 | ○ | ○ | ○ | ○ | 0.44 | - | - | - |
| Example 11 | ○ | ○ | 138 | 3.2 | ○ | ○ | ○ | ○ | 0.47 | - | - | - |
| Example 12 | ○ | ○ | 139 | 3.3 | ○ | ○ | ○ | ○ | 0.46 | - | - | - |
| Example 13 | ○ | ○ | 141 | 3.3 | ○ | ○ | ○ | ○ | 0.43 | - | - | - |
| Example 14 | ○ | ○ | 140 | 3.3 | ○ | ○ | ○ | ○ | 0.49 | - | - | - |
| Example 15 | ○ | ○ | 145 | 3.5 | ○ | ○ | ○ | ○ | 0.44 | - | - | - |
| Example 16 | ○ | ○ | 142 | 3.4 | ○ | ○ | ○ | ○ | 0.42 | - | - | - |
| Example 17 | ○ | ○ | 137 | 3.2 | ○ | ○ | ○ | ○ | 0.55 | - | - | - |
| Example 18 | ○ | ○ | 135 | - | ○ | ○ | ○ | ○ | - | 3.92 | 4.08 | +4.08 |
| Example 19 | ○ | ○ | 138 | - | ○ | ○ | ○ | ○ | - | 3.93 | 4.09 | +4.07 |
| Example 20 | ○ | ○ | 139 | - | ○ | ○ | ○ | ○ | - | 3.89 | 4.04 | +3.86 |
| Example 21 | ○ | ○ | 141 | - | ○ | ○ | ○ | ○ | - | 3.94 | 4.10 | +4.06 |
| Example 22 | ○ | ○ | 141 | - | ○ | ○ | ○ | ○ | - | 4.29 | 4.55 | +6.06 |
| Example 23 | ○ | ○ | 141 | 3.3 | ○ | ○ | ○ | ○ | 0.43 | - | - | - |
| Example 24 | ○ | Δ | 140 | 3.2 | ○ | ○ | ○ | ○ | 0.44 | - | - | - |
| Example 25 | ○ | ○ | 144 | 3.6 | ○ | ○ | ○ | ○ | 0.51 | - | - | - |
| Comparative Example 1 | Δ | ○ | 112 | 2.7 | × | × | ○ | ○ | - | - | - | - |
| Comparative Example 2 | Δ | Δ | 133 | 3.1 | Δ | Δ | ○ | ○ | - | - | - | - |
| Comparative Example 3 | ○ | ○ | 108 | 2.7 | × | × | ○ | ○ | 0.52 | - | - | - |
| Comparative Example 4 | ○ | ○ | 107 | - | × | × | ○ | ○ | - | 3.95 | 4.17 | +5.57 |

### INDUSTRIALAPPLICABILITY

The resin obtained by curing the crosslinkable methacrylic resin monomer composition of the present invention enables to obtain a molded article which has been improved in heat resistance, rigidity, low water absorption, chemical resistance and the like without deteriorating transparency which a PMMA originally has.

The resin molded article according to the present invention can be suitably used for an optical member which strongly requires improvement in heat resistance, rigidity, low water absorption, chemical resistance and the like, as well as a general-purpose transparent member for a grazing material, various covers, a signboard and the like.

Examples thereof include a molded part for rear projector (diffusion rear projection-screen, lenticular-screen, spherical lens/orthogonal lenticular lens array-screen, Fresnel lens-attached diffusion/Fresnel lens-attached lenticular-screen, projection lens for rear projection TV, front plate for rear projection TV and the like), a liquid crystal substrate, an organic EL substrate, a touch panel substrate, a diffusing plate for liquid crystal, a prism sheet for liquid crystal, a PDP front plate, a liquid crystal panel-protecting plate and the like. In addition, the aforementioned optical products (parts) are particularly suitable for purposes of mounting on automobile particularly requiring heat resistance.

Furthermore, the composition and resin according to the present invention can also be applied for modification of an acrylic paint or an adhesive.

## Claims

1. A methacrylic resin monomer composition consisting of the following (A) to (C):
(A) a methyl methacrylate monomer and/or a syrup thereof:
(B) a compound represented by the general formula (1) 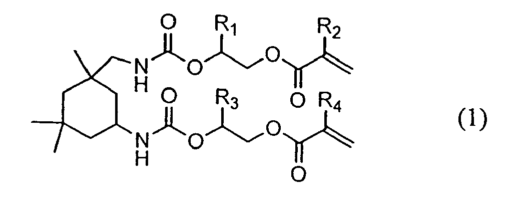 wherein, in the formula, R₁ and R₃, and R₂ and R₄, each represent a pair of hydrogen atoms or a pair of methyl groups; and
(C) a radical initiator, optionally together with one or more of: a light stabiliser; an anti-oxidant; an antistatic agent; an antifogging agent; a colorant; and an internal mold release agent.

2. The methaacrylic resin monomer composition according to claim 1, wherein (A) is a methyl methacrylate syrup.

3. A resin obtained by polymerizing the composition as described in claim 3.

4. A molded article comprising the resin as described in claim 3.

5. A transparent member comprising the molded article as described in claim 4.

6. An optical member comprising the transparent member as described in claim 5.
